Europäisches Patentamt

European Patent Office

Office européen des brevets

(19)

(11) Veröffentlichungsnummer: **0 389 623**
**A1**

(12)

# EUROPÄISCHE PATENTANMELDUNG
## veröffentlicht nach Art. 158 Abs. 3
## EPÜ

(21) Anmeldenummer: 89900368.5

(22) Anmeldetag: 26.08.88

(86) Internationale Anmeldenummer:
PCT/SU88/00169

(87) Internationale Veröffentlichungsnummer:
WO 90/02305 (08.03.90 90/06)

(51) Int. Cl.5 **F28D 5/00, F25B 39/02**

(43) Veröffentlichungstag der Anmeldung:
03.10.90 Patentblatt 90/40

(84) Benannte Vertragsstaaten:
**AT CH DE FR GB IT LI NL SE**

(71) Anmelder: **KIEVSKY POLITEKHNICHESKY
INSTITUT IMENI 50-LETIA VELIKOI
OKTYABRSKOI SOTSIALISTICHESKOI
REVOLJUTSII**
pr. Pobedy, 37
**Kiev, 252056(SU)**

Anmelder: **ODESSKY
INZHENERNO-STROITELNY INSTITUT**
ul. Didrikhsona, 4
**Odessa, 270029(SU)**

(72) Erfinder: **GERSHUNI, Alexandr Naumovich**
ul. Ulyanovykh, 33-19
**Kiev, 252005(SU)**
Erfinder: **MAISOTSENKO, Valery Stepanovich**
ul. Sadovaya, 21-7
**Odessa, 270000(SU)**
Erfinder: **KAMINNIK, Alexandr Stepanovich**
1 Vodoprovodny per, 9-7
**Odessa, 270046(SU)**
Erfinder: **ZARIPOV, Vladilen Kominovich**
ul. Tychiny, 12a-66
**Kiev, 252098(SU)**
Erfinder: **NISCHIK, Alexandr Pavlovich**
ul. Raduzhnaya, 11-40
**Kiev, 252218(SU)**
Erfinder: **LEVTEROV, Alexandr Iliich**
ul. Draizera, 8a-54
**Kiev, 252217(SU)**

(74) Vertreter: **Nix, Frank Arnold, Dr.**
**Kröckelbergstrasse 15**
**D-6200 Wiesbaden(DE)**

EP 0 389 623 A1

(54) APPARAT ZUR INDIREKTEN VERDAMPFUNGSKÜHLUNG EINES GASES.

(57) Der Apparat zur indirekten Verdampfungskühlung eines Gases enthält einen Mantel (1) mit einem
Eintrittsstutzen (2) und Austrittsstutzen (3 und 4). Der
Eintrittsstutzen (2) ist zur Einleitung eines gemeinsamen Gasstromes bestimmt. Der Austrittsstutzen (3)
dient zur Ableitung des Hauptgasstromes und ist an
der Seite angeordnet, wo der Hauptgasstrom dem
Abnehmer zugeführt wird. Der Austrittsstutzen (4) ist
zur Ableitung des Hilfsgasstromes in die Atmosphäre bestimmt und an der Seite des Eintrittsstutzens
(2) angeordnet. Im Mantel (1) befindet sich ein benetzbarer kapillarporiger Körper (6). Im Körper (6)
sind Naß-kanäle (7) und Trockenkanäle (8) ausgeführt, die an der Seite des Austrittsstutzens (3) miteinander in Verbindung stehen. Dadurch wird es
möglich, das Verhältnis der Flächeninhalte der
Trocken- und Naßkanäle zueinander frei zu wählen,
was zu einer bedeutenden Erhöhung der Wirksamkeit der Abkühlung führt.

FIG.1

APPARAT ZUR INDIREKTEN VERDAMPFUNGSKÜHLUNG EINES GASES

## Gebiet der Technik

Die vorliegende Erfindung bezieht sich auf Wärmeaustauschapparate zur indirekten Verdampfungskühlung mit einem unmittelbaren Kontakt eines Kühlgases mit einer Flüssigkeit.

## Zugrundeliegender Stand der Technik

In den Wärmeaustauschapparaten des genannten Typs erfolgt die Wärmeabführung von Gasstrom, der als Hauptstrom bezeichnet wird, durch eine Trennwand des Apparates zu der Flüssigkeit, die durch Verdampfung in zweiten Gasstrom abgekühlt wird, welcher als Hilfsstrom bezeichnet wird. Als Kältequelle dient die verdampfende Flüssigkeit, die sich entweder an der Wand des Wärmeaustauschapparates als Dünnfilm, oder in einem an dieser Wand befestigten kapillarporigen Stoff befindet. Der Hauptluftstrom fließt in von den Wänden aus einem feuchtigkeitsundurchlässigen Werkstoff gebildeten Kanälen, die als Trockenkanäle bezeichnet werden, während der Hilfsluftstrom in, z. B., von den Wänden mit einer dünnen Schicht aus einem kapillarporigen wassergesättigten Stoff gebildeten Kanälen, die als Naßkanäle bezeichnet werden, fließt.

Es ist ein Wärmeaustauschapparat zur indirekten Verdampfungskühlung von Gasen (US, A, 2990696) bekannt, der einen Mantel mit zwei Eintrittsstutzen zur Einleitung von jeweils eines Hauptstroms und eines Hilfsstroms senkrecht zueinander und mit zwei Austrittsstutzen zur Ableitung jeweils des Hauptstrom und des Hilfsstroms enthält. Im Mantel sind Trocken- und Naßkanäle vorgesehen, die senkrecht zueinander verlaufen. Die Trockenkanäle sind für das Fließen des Hauptstromes vorgesehen. Die Naßkanäle dienen für das Fließen des Hilfsstromes und enthalten einen benetzbaren kapillarporigen Stoff. Dieser Stoff kann an den Wänden des Naßkanals angebracht werden, wodurch ein Fliessen des Hilfsstromes zwischen den Schichten des Stoffes gewährleistet wird, oder er kann in der Kanalmitte angebracht werden, wodurch ein Fließen des Hilfsstromes zwi-

schen der Kanalwand und dem benetzbaren kapillarporigen Stoff gewährleistet wird. Der Wärmeaustauschapparat verfügt auch über ein Mittel zur Zuführung einer Flüssigkeit, die den genannten kapillarporigen Stoff benetzen soll. In Anbetracht des Obendargelegten ist es klar, daß in diesem Wärmeaustauschapparat ein Kreuzstromschema der Wärmeträgerbewegung verwendet wird. Den Fachleuten auf diesem Gebiet der Technik ist es gut bekannt, daß sich das genannte Schema der Wärmeträgerbewegung unter sonst gleichen Bedingungen durch eine geringere Menge der übertragenen Wärme auszeichnet, als es bei der Bewegung im Gegenstrom der Fall ist. Außerdem wird im vorliegenden Fall eine getrennte Einleitung und Ableitung des Hilfs- und des Hauptstromes verwendet. Dadurch wird die Konstruktion des Wärmeaustauschapparates bedeutend erschwert.

Es ist ein Apparat zur indirekten Verdampfungskühlung eines Gases (SU, A, 407515) bekannt, der einen Mantel mit einem Eintrittsstutzen für einen gemeinsamen Gasstrom, der einen Haupt- und einen Hilfsstrom einschließt, und mit Austrittsstutzen jeweils für den Hauptstrom und den Hilfsstrom, sowie mit in diesem Mantel ausgeführten Meßkanälen aus einem benetzbaren kapillarporigen Stoff und Trockenkanälen aus einem feuchtigkeitsundurchlässigen Werkstoff, die parallel zueinander liegen und miteinander verbunden sind, sowie ein Mittel zur Zuführung einer Flüssigkeit enthält, welche den kapillarporigen Stoff benetzen soll.

Näher erläutert, enthält der bekannte Apparat in Reihe angeordnete Platten, welche abwechselnde Flächen aufweisen, die paarweise Trockenkanäle aus einem feuchtigkeitsundurchlässigen Werkstoff, d. h. aus dem Werkstoff derselben Platten, sowie Meßkanäle aus denselben Flächen bilden, die mit einem kapillarporigen Stoff überzogen sind. An der Seite des Eintrittsstutzens stehen die Meßkanäle mit dem Austrittsstutzen für den Hilfsstrom in Verbindung, wobei sie durch senkrechte Wände überdeckt sind, die den verbrauchten Hilfsstrom in den Austritts-

stutzen leitet, der im Oberteil des Mantels angeordnet
ist, während an der Seite des Austrittstutzens für den
Hauptstrom die mit den Trockenkanälen in Verbindung
stehen. Das Mittel zur Zuführung der Flüssigkeit, die
den kapillarporigen Stoff benetzt, ist in Form einer Auffangschale ausgebildet, die mit Wasser gefüllt und im
Unterteil des Mantels angeordnet wird. Der kapillarporige
Stoff wird mit Wasser aus der Auffangschale durch die
Einwirkung des Kapillarerzeugers benetzt.

Der Apparat hat folgende Wirkungsweise. Der gemeinsame Strom wird mittels eines Lüfters in die Trockenkanäle
eingeleitet. Am Austritt aus dem Trockenkanal wird dieser
Strom in einen Hauptstrom, der dem Abnehmer zugeführt wird,
und einen Hilfsstrom eingeteilt, der durch den Strömungswiderstand des Stutzens im Gegenstrom durch den Naßkanal
geleitet wird. Der Strom, der zwischen den Oberflächen
der die Trockenkanäle bildenden Platten geleitet wird,
wird ohne Änderung des Feuchtigkeitsgehaltes abgekühlt.
Das im vorliegenden Fall zu verwendende Gegenstromschema
der Garbewegung gestattet es, die Menge der zu übertragenden Wärme zu vergrößern. Durch die Verwendung von
mehreren in Reihe angeordneten Platten, welche abwechselnde Trocken- und Naßkanäle in Form von Schlitzen bilden, wird jedoch die gegenseitige Anordnung der genannten
Kanäle begrenzt, d. h. das Verhältnis der Wärmeaustauschflächen der Trocken- und der Naßkanäle zueinander kann nicht
geändert werden. Bei diesem Apparat ist der Flächeninhalt von Trockenkanälen dem Flächeninhalt von Naßkanälen
gleich, wodurch eine weitere Intensivierung des Abkühllungsvorganges nicht verwirklicht werden kann. Außerdem
besteht keine Möglichkeit, am Austritt aus dem Apparat
eine wirksame Einteilung des gemeinsamen Stromes in
einen Hilfsstrom und einen Hauptstrom zu sichern, weil
an der Seite des Austrittsstutzens für den Hauptstrom
eine Vergrößerung des Strömungswiderstandes nicht gewährleistet wird, die für die Durchführung einer wirksamen Aufteilung erforderlich ist.

Offenbarung der Erfindung

Der Erfindung liegt die Aufgabe zugrunde, einen Apparat zur indirekten Verdampfungskühlung eines Gases zu entwickeln, in dem durch eine unbegrenzte gegenseitige Anordnung von Trocken- und Naßkanälen im Raum des Apparates sowie durch eine Änderung der Form derselben die Wirksamkeit der Abkühlung erhöht wird.

Die gestellte Aufgabe wird dadurch gelöst, daß in einem Apparat zur indirekten Verdampfungskühlung eines Gases, enthaltend einen Mantel mit einem Eintrittsstutzen für einen gemeinsamen Gasstrom und mit Austrittsstutzen jeweils für einen Hauptgasstrom und einen Hilfsgasstrom, der im Gegenstrom zu dem Hauptgasstrom fließt, sowie mit in diesem Mantel ausgeführten Naßkanälen aus einem kapillarporigen Stoff und Trockenkanälen aus einem feuchtigkeitsundurchlässigen Werkstoff, welche Kanäle an der Seite des Austrittsstutzens für den Hauptstrom miteinander in Verbindung stehen, sowie ein Mittel zur Zuführung einer Flüssigkeit, die den kapillarporigen Stoff benetzt, erfindungsgemäß die Naß- und Trockenkanäle in einem im Mantel untergebrachten kapillarporigen Körper ausgeführt sind, und die Trockenkanäle Rohre darstellen, deren Enden an der Seite des Austrittsstutzens über den kapillarporigen Körper hinaustreten und in einer Rohrplatte befestigt sind, die in einem Abstand von dem kapillarporigen Körper unter Bildung einer mit dem Austrittsstutzen verbundenen Kammer für die Ableitung des verbrauchten Hilfsgasstromes angeordnet ist.

Eine solche Konstruktion gewährleistet eine Erhöhung der Wirksamkeit der Abkühlung. Dadurch, daß im Mantel ein benetzbarer kapillarporiger Körper angebracht ist, ist die Möglichkeit einer unbegrenzten gegenseitigen Anordnung von Trocken- und Naßkanälen sowie einer Ausführung der Kanäle unterschiedlicher Ausführungsform im Querschnitt, insbesondere einer Ausführung der Kanäle in Röhrenform, gegeben. Dadurch kann das Verhältnis der Flächeninhalte der Trocken- und Naßkanäle zueinander in einem breiten Bereich gewählt werden. Dabei kann z. B. der Flächeninhalt der

Trockenkanäle bedeutend größer als der Flächeninhalt der Naßkanäle sein, weil der Wärmeaustauschprozeß in Trockenkanälen mit einer geringeren Intensität als der Wärme- und Massesaustauschprozeß in Naßkanälen verläuft.

Es ist zweckmäßig, daß die Länge jedes hinaustretenden Röhrchens 0,03 bis 0,15 der Länge des zugehörigen Trockenkanals beträgt.

Kurze Beschreibung der Zeichnungen

Nachstehend wird ein bevorzugtes Ausführungsbeispiel der Erfindung angeführt, die anhand der beigefügten Zeichnungen veranschaulicht wird, in denen gleiche Teile mit gleichen Bezugszeichen bezeichnet sind. Es zeigen:

Fig. 1 - in schematischer Darstellung einen erfindungsgemäßen Apparat zur indirekten Verdampfungskühlung eines Gases in Schnitt;

Fig. 2 - den Schnitt nach der Linie II-II in Fig. 1;

Fig. 3 - eine weitere Ausführungsvariante des Trockenkanals des erfindungsgemäßen Apparates.

Beste Ausführungsvariante der Erfindung

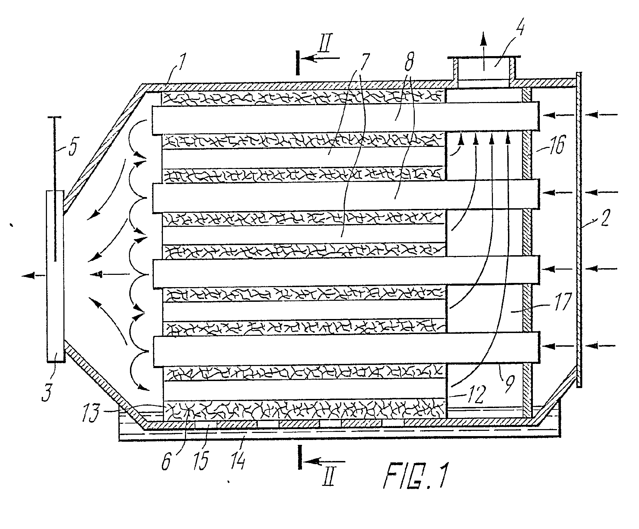

Wie es aus Fig. 1 zu ersehen ist, enthält der Apparat zur indirekten Verdampfungskühlung eines Gases einen Mantel 1 mit einem Eintrittsstutzen 2 und zwei Austrittsstutzen 3 und 4. Der Eintrittsstutzen 2 dient zur Einleitung eines gemeinsamen Gasstromes, der z. B. durch einen Lüfter erzeugt wird. Der Austrittsstutzen 3 dient zur Ableitung des Hauptstromes. Dieser Stutzen hat einen regelbaren Schieber 5 zur Verminderung des Durchgangsquerschnittes des Stutzens. Der im Oberteil des Mantels angeordnete Austrittsstutzen 4 dient zur Ableitung des im Gegenstrom zu dem Hauptstrom fließenden verbrauchten Hilfsstromes in die Atmosphäre.

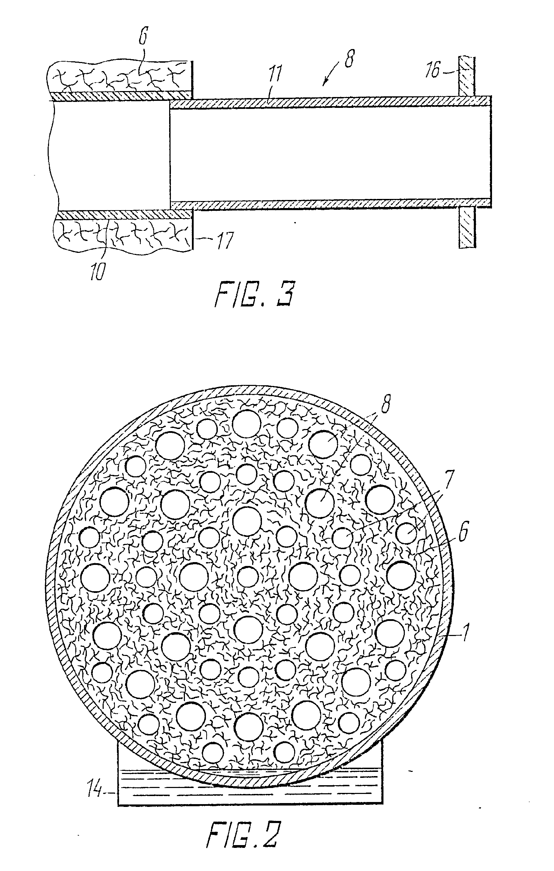

Wie in Fig. 1 und 2 dargestellt, ist im Mantel 1 ein benetzbarer kapillarporiger Körper 6 untergebracht. In diesem Körper sind Naßkanäle 7 und Trockenkanäle 8 ausgeführt, die auf der Seite des Austrittsstutzens 3 miteinander in Verbindung stehen.

EP 0 389 623 A1

Im Ausführungsbeispiel sind die Trockenkanäle 8 von Rohren 9 aus einem feuchtigkeitsundurchlässigen Werkstoff gebildet, die in den benetzbaren kapillarporigen Körper 6 eingeführt sind. Die Trockenkanäle 8 können jedoch von einer abgeschmolzenen feuchtigkeitsundurchlässigen Schicht 10 gebildet werden, wie das in Fig. 3 dargestellt ist. Je nach der Entfernung von der abgeschmolzenen feuchtigkeitsundurchlässigen Schicht 10 nimmt die Porösität bis zu einer normal vorgegebenen zu. Die vorstehenden Enden der Trockenkanäle, die außerhalb des Körpers 6 liegen, sind von Rohren 11 gebildet.

Dadurch, daß im Mantel 1 der benetzbare kapillarporige Körper 6 angeordnet ist, kann das Verhältnis der Wärmeaustauschflächen der Trocken- und der Naßkanäle zueinander geändert werden, weil die die Anordnung dieser Kanäle relativ zueinander unbeschränkt ist sowie ihre Form geändert werden kann. Die Kanäle 7 und 8 können unterschiedliche Form des Querschnittes aufweisen, insbesondere eine Röhrenform haben.

Der benetzbare kapillarporige Körper 6 kann z. B. aus Fasern, einen Pulver oder ähnlichen Teilchen angefertigt werden. Die den Körper 6 bildenden Teilchen können miteinander verbunden oder nicht verbunden sein. Auf diese Weise kann der kapillarporige Körper 6 aus einem netzartigen, keramischen Stoff, Webstoff, Filzstoff, Karton, verschiedenen Schüttungen, einem aus Fasern und Pulvern gesinterten Material usw. hergestellt werden. Dabei muß der benetzbare kapillarporige Körper 6 durchlässig sein, d. h., er muß keine geschlossenen und Sackporen aufweisen und die Hebung der Benetzungsflüssigkeit unter Einwirkung der Kapillarkräfte auf eine ausreichend große Höhe gewährleisten, die die Möglichkeiten für die Wahl der Vertikalmaße des Apparates bestimmt. Man muß dabei berücksichtigen, daß bei Verwendung von nicht gebundenen Teilchen im Körper 6 Einsätze bestehend, z. B., aus Netzen von ausreichender Steifigkeit und mit durchlässigen Wänden verwendet werden müssen.

Der in Fig. 1 dargestellte kapillarporige Körper 6 ist aus einem Metallfasermaterial hergestellt, das eine steife Konstruktion mit Stirnflächen 12 und 13 bildet. Zur eventuellen zusätzlichen Änderung des Verhältnisses der Flächeninhalte der Trocken- und der Naßkanäle 7 und 8 zueinander können die genannten Stirnflächen eine beliebige willkürliche Form haben. Bei einer Änderung der Kanallänge können diese Flächen z. B. stufenförmig ausgebildet werden. Wenn der kapillarporige Körper aus schüttbaren Teilchen, z. B. aus Sand, Glaskügelchen usw. besteht, ist es außerdem zweckmäßig, Stirngitter zu verwenden, die den Körper 6 begrenzen.

Die Trockenkanäle 8 können mit einem hochporösen Material (in Fig. nicht wiedergegeben) gefüllt werden, das aus Fasern und Pulvern (mit einem minimalen hydraulischen Widerstand) besteht. Dadurch wird der Wärmeaustausch in den Kanälen intensiviert. Die Intensivierung des Wärmeaustausches nimmt bei einer Vergrößerung der Wärmeleitfähigkeit der Fasern und der Pulver, aus welchen dieses Material besteht, sowie im Falle einer Verbesserung der Kontakte der Materialteilchen miteinander und mit der Kanalwand zu, wobei die Wärmeleitfähigkeit des die Trockenkanäle füllenden porösen Materials erhöht wird. Eine Intensivierung des Wärmeaustausches in den Trockenkanälen wird auch durch eine Strukturierung der Innenfläche der Kanäle 8 nach einem beliebigen Verfahren erzielt. Zu diesem Zweck können z. B., an der Innenfläche Nuten vorgesehen werden.

Durch die Verwendung des kapillarporigen Körpers 6 wird die Beförderung der Flüssigkeit aus dem Mittel zur Zuführung der Benetzungsflüssigkeit zu der Verdampfungsfläche in den Naßkanälen 7 sichergestellt. Wie es in Fig. 1 oder 2 wiedergegeben ist, wird beim vorliegenden Ausführungsbeispiel der Erfindung als Mittel zur Zuführung der Flüssigkeit eine mit Wasser gefüllte Auffangschale 14 verwendet, in der der benetzbare kapillarporige Körper 6 mit seinem Unterteil untergebracht ist. Die genannte Auffangschale 14 weist eine Bohrung 15 für die Wasserzuführung in die Kapillare des Körpers 6 auf. Es ist klar, daß

---

* So der Originaltext. Richtig: Der Mantel 1 hat im Bereich der Anfangsschale 14 Bohrungen 15 zur Wasserzuführung in die Kapillaren des Körpers 6.

anstelle der genannten Auffangschale 14 ein beliebiges Mittel zur Flüssigkeitszuführung, z. B., ein Mittel zur Berieselung eingesetzt werden kann, das eine Zuführung der Flüssigkeit zu der Verdampfungsfläche der Naßkanäle gewährleistet. Anstelle des Wassers kann außerdem eine andere beliebige schnell verdampfende Flüssigkeit verwendet werden.

Wie es in Fig. 1 dargestellt ist, ist im Mantel eine Rohrplatte 16 vorgesehen, in der die vorstehenden Enden der die Trockenkanäle bildenden Rohre 9 befestigt sind. Die Rohrplatte 16 ist in einem Abstand von der Grenzfläche 12 des benetzbaren kapillarporigen Körpers 6 angeordnet, d. h., zwischen der Rohrplatte 16 und der Grenzfläche 12 wird eine Kammer 17 zur Ableitung des verbrauchten Hilfsgasstromes gebildet, die für eine Vorkühlung des gemeinsamen Gasstromes sorgt sowie ein Vermischen des einzuleitenden gemeinsamen Gasstromes mit dem verbrauchten Hilfsgasstrom verhindert.

Im Unterschied zu dem oben angeführten Ausführungsbeispiel der Erfindung ist in Fig. 3 eine Konstruktion des Apparates wiedergegeben, bei welcher in der Rohrplatte 16 Rohre 11 befestigt sind, die vorstehende Enden der Trockenkanäle 5 bilden. Auf diese Weise befindet sich praktisch jedes der Rohre 11 in der Kammer 17, wobei das eine Ende jedes Rohres in dem benetzbaren kapillarporigen Körper 6 und das andere Ende -- in der Rohrplatte 16 befestigt sind.

Den auf diesem Gebiet tätigen Fachleuten ist klar, daß die Intensität der Vorkühlung zunimmt, wenn die in der Kammer 17 angeordneten Abschnitte der Rohre 9 und die Rohre 11 mit einem benetzbaren kapillarporigen Material (in Fig. nicht wiedergegeben) überzogen sind.

Es ist zweckmäßig, daß die Länge jedes der in Fig. 1 und 3 gezeigten vorstehenden Abschnitte der Rohre 9, die in der Kammer 17 untergebracht sind, und die Länge jedes der Rohre 11 0,03 bis 0,15 der Länge des zugehörigen Trockenkanals 5 beträgt, d. h., es ist vorzuziehen, daß der Abstand der Stirnfläche 12 des benetzbaren kapillar-

porigen Körpers 6 und der Rohrplatte 16 voneinander in denselben Grenzen liegt. Dieser Bereich der Abstandsänderung ist mit Rücksicht auf die Wirksamkeit der Wärme- und Massenübertragung und auf den Strömungswiderstand des verbrauchten Hilfsgasstromes der günstigste. Berechnungen und experimentelle Daten zeigen, daß bei einer Größe des genannten Abstandes von unter 0,03 der Länge der Trockenkanäle 3 der Strömungswiderstand stark zunimmt, was zu einer Verminderung des Durchflusses des Hilfsstromes und folglich zu einer starken Verminderung der Kälteleistung des Apparates und zu einer Erhöhung des Energieverbrauches führt. Bei einer Größe des genannten Abstandes von über 0,15 wird die Wirksamkeit des Vorganges der Verdampfungskühlung bei der Bewegung im Gegenstrom in den Kanälen 6 und 7 bedeutend vermindert, was ebenfalls zu einer bedeutenden Verminderung der Kälteleistung des Apparates führt. Die optimale Größe dieses im genannten Bereich liegenden Abstandes wird in jedem konkreten Fall in Abhängigkeit von den Konstruktions- und betriebstechnischen Daten des Apparates bestimmt.

Der vorliegende Apparat zur indirekten Verdampfungskühlung eines Gases hat folgende Wirkungsweise. Mittels eines Lüfters (in Fig. nicht wiedergegeben) wird ein gemeinsamer Gasstrom durch den Eintrittsstutzen 2 in die Trockenkanäle 3 eingeleitet. Indem der gemeinsame Strom durch die in der Kammer 17 befindlichen Abschnitte der Rohre 9 fließt, wird er vorgekühlt. Dies erfolgt dank dem Wärmeaustausch mit dem Hilfsstrom, der in die Kammer 17 aus den Naßkanälen 7 zugeführt wird. Der vorgekühlte gemeinsame Gasstrom wird dann bei seinem Fließen durch die Trockenkanäle 3 in dem benetzbaren kapillarporigen Körper 6 weiter gekühlt. Hier steht die Außenfläche der Trockenkanäle 3 mit dem benetzbaren kapillarporigen Körper 6 in Berührung, der mit dem in der Auffangschale 14 befindlichen Wasser benetzt wird, das durch die Bohrung 15 in die Kapillare des Materials dieses Körpers gelangt. Am Austritt aus den Rohren 9 ist der gemeinsame Gasstrom auf eine im Bereich des Taupunktes liegende Temperatur ge-

kühlt, wobei sein Feuchtigkeitsgehalt unverändert bleibt.

Hier wird der gemeinsame Strom in zwei Ströme, u. z. einen Hauptstrom und einen Hilfsstrom aufgeteilt. Eine wirksame Aufteilung des gemeinsamen Stromes in die zwei genannten Ströme wird durch eine Erhöhung des Strömungswiderstandes an der Seite des Austrittsstutzens 3 mittels des regelbaren Schiebers 5 erzielt, durch den der Durchgangsquerschnitt des Stutzens 3 vermindert wird. Mit diesem Regelschieber 5 kann das Verhältnis des Haupt- und des Hilfsgasstromes zueinander geändert werden. Der Hauptstrom wird durch den Austrittsstutzen 3 zum Abnehmer geleitet, während der Hilfsstrom in die Maßkanäle 7 eingeleitet wird. Über diese Kanäle fließt der Hilfsstrom im Gegenstrom zu dem gemeinsamen Strom. Beim Fließen des Hilfsstromes in den Maßkanälen 7 findet ein oberflächlicher Wärme- und Massenaustausch zwischen dem gemeinsamen Strom (der durch die Rohre 9 fließt) und dem im Gegenstrom zu diesem (durch die Kanäle 7) fließenden Hilfsstrom durch die Wärme- und Massenaustauschflächen der Rohre 9 und die Oberfläche des den Kanal 7 bildenden kapillarporigen Körper 6 statt. Im Ergebnis dieses Prozesses wird der gemeinsame Gasstrom in einem Temperaturbereich bis auf den Taupunkt ohne Änderung des Feuchtigkeitsgehaltes abgekühlt, während der Hilfsstrom (durch eine Wärmeentnahme von dem Hauptstrom) erwärmt und (durch eine Verdampfung der Feuchtigkeit aus dem benetzbaren kapillarporigen Körper 6 in diesen Hilfsstrom) befeuchtet wird. Dabei wird am Austritt aus den Kanälen 7 die Temperatur des Hilfsstromes infolge einer unvollständigen Rekuperation etwas unter der Temperatur des einzuleitenden gemeinsamen Stromes liegen, während dessen relative Luftfeuchtigkeit fast 100% betragen wird. Diese Kenndaten des Hilfsstromes sind vom Standpunkt seines Abkühlungsvermögens aus von Bedeutung. Deshalb wird der Hilfsstrom mit solchen Kenndaten (bevor er in die Atmosphäre abgeleitet wird) in die Kammer 17 zugeführt, in der ein oberflächlicher Wärmeaustausch mit dem zuzuführenden gemeinsamen Strom stattfindet, der Umgebungstemperatur hat. Zu einer besonders wirksamen Verwertung

EP 0 389 623 A1

des restlichen Abkühlungsvermögens des Hilfsstromes wird dieser Strom zum Wärmeaustausch mit dem gemeinsamen Strom so geführt, daß die Fließrichtung des Hilfsstromes in der Kammer 17 um 90° geändert wird, sodaß eine intensive Verwirbelung stattfindet. Dadurch werden bei gegebenen Kenndaten der die Wärme austauschenden Ströme die Wärmeabgabekoeffizienten an der Außenfläche der Rohre 9 um ein 2 bis 3faches erhöht. Dieser Faktor gestattet es, die zu übertragende Wärmemenge zu vergrößern, was zu einer vorherigen Temperaturerniedrigung des gemeinsamen Stromes bis zu seiner endgültigen Abkühlung innerhalb der im benetzbaren kapillarporigen Körper 6 liegenden Trockenkanäle führt. Dadurch kann die Wärmebelastung des Wärmeaustauschapparates vermindert und damit eine Erhöhung der Wirksamkeit der Gasabkühlung erzielt werden.

Man muß darauf hinweisen, daß es bei dem erfindungsgemäßen Apparat möglich ist, eine Reihe von betriebstechnischen und Konstruktionsdaten wesentlich zu verbessern. So kann bei der Änderung der Fließrichtung des Hilfsstromes in der Kammer 17 um 90° und der Lenkung dieses Stromes nach oben zur Abführung in die Atmosphäre durch den Austrittstutzen 4 eine wirksamere Abtrennung der Wassertropfen von dem Hilfsluftstrom gewährleistet werden. Dadurch wird es möglich, den Wasserdurchsatz im Wärmeaustauschapparat wesentlich zu reduzieren, was auch zu einer Erhöhung der Wirksamkeit der Abkühlung beiträgt.

Auf diese Weise wird durch die Verwendung des erfindungsgemäßen Apparates zur indirekten Verdampfungsabkühlung eines Gases eine wesentliche Erhöhung der Wirksamkeit der Abkühlung gewährleistet, wobei eine bedeutende Temperaturerniedrigung des Hauptstromes ohne zusätzlichen Energieaufwand gesichert wird. Außerdem wird bei dem erfindungsgemäßen Apparat eine Verbesserung von betriebstechnischen und Konstruktionsdaten durch eine Verminderung des Wasserverbrauches und durch die Schaffung von zweckmäßigeren Bedingungen für die Einleitung und die Einteilung der die Wärme austauschenden Gasströme gewährleistet.

Gewerbliche Anwendbarkeit

Der Apparat zur indirekten Verdampfungskühlung eines Gases kann zur Luftkühlung in Klimaanlagen in Sozial- und Produktionsräumen, Kabinen und Sitzräumen von Fahrzeugen Anwendung finden.

PATENTANSPRÜCHE

1. Apparat zur indirekten Verdampfungskühlung eines Gases, enthaltend einen Mantel (1) mit einem Eintrittsstutzen (2) für einen gemeinsamen Gasstrom und mit Austrittsstutzen (3, 4) jeweils für einen Hauptstrom und einen Hilfsstrom, der im Gegenstrom fließt, sowie mit in diesem Mantel (1) ausgeführten Naßkanälen (7) aus einem kapillarporigen Stoff und Trockenkanälen (8) aus einem feuchtigkeitsundurchlässigen Werkstoff, welche Kanäle an der Seite des Austrittsstutzens (3) für den Hauptstrom miteinander in Verbindung stehen, sowie ein Mittel zur Zuführung einer Flüssigkeit, die den kapillarporigen Stoff benetzt, d a d u r c h  g e k e n n z e i c h n e t , daß die Naß- und Trockenkanäle (7, 8) in einem im Mantel (1) untergebrachten kapillarporigen Körper (6) ausgeführt sind, und die Trockenkanäle (8) Rohre (9) darstellen, deren Enden an der Seite des Austrittsstutzens (2) über den kapillarporigen Körper (6) hinaustreten und in einer Rohrplatte (16) befestigt sind, die in einem Abstand von dem kapillarporigen Körper (6) unter Bildung einer mit dem Austrittsstutzen (3) verbundenen Kammer (17) für die Ableitung des verbrauchten Hilfsgasstromes angeordnet ist.

2. Apparat nach Anspruch 1, d a d u r c h  g e - k e n n z e i c h n e t , daß die Länge jedes vorstehenden Endes des Rohres (9) 0,03 bis 0,15 der Länge des zugehörigen Trockenkanals (3) beträgt.

FIG.1

FIG. 3

FIG.2

# INTERNATIONAL SEARCH REPORT

International Application No PCT/SU 88/00169

## I. CLASSIFICATION OF SUBJECT MATTER (if several classification symbols apply, indicate all) [6]

According to International Patent Classification (IPC) or to both National Classification and IPC

IPC[4]   F28D 5/00, F25B 39/02

## II. FIELDS SEARCHED

| Minimum Documentation Searched [7] | |
| --- | --- |
| Classification System | Classification Symbols |
| IPC[4] | F28D 5/00, F25B 39/02 |

Documentation Searched other than Minimum Documentation
to the Extent that such Documents are included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
| --- | --- | --- |
| A | SU, A1, 552494 (Odessky tekhnologichesky institut Kholodilnoi promyshlennosti) 11 April 1977 (11.04.77) see the claims and the abstract | 1 |
| A | SU, A1, 659874 (Konditersko-bulochny kombinat "Cheremushki") 30 April 1979 (30.04.79) see the claims, the drawing | 1 |
| A | SU, A1, 620782 (P.A. Skotnikov et al.) 11 August 1978 (11.08.78) see the claims, the drawing | 1 |
| A | US, A, 2990696 (STEWART-WARNER CORPORATION) 04 July 1961 (04.07.61) see figure 8 (cited in the description) | 1 |
| A | US, A, 2960847 (STEWART-WARNEN CORPORATION) 22 November 1960 (22.11.60) see figures 5,6 | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
| --- | --- |
| 17 April 1989 (17.04.89) | 24 May 1989 (24.05.89) |
| International Searching Authority | Signature of Authorized Officer |
| ISA/SU | |

Form PCT/ISA/210 (second sheet) (January 1985)